# EUROPÄISCHE PATENTSCHRIFT

(11) **EP 3 053 077 B1**
(45) Veröffentlichungstag und Bekanntmachung des Hinweises auf die Patenterteilung: **28.11.2018**
(21) Anmeldenummer: 14771565.0
(22) Anmeldetag: 19.09.2014
(51) Int. Cl.: G06F 21/31, G06F 21/62

(54) **VERFAHREN ZUR DATENZUGRIFFSTEUERUNG**
DATA ACCESS CONTROL METHOD
PROCÉDÉ DE COMMANDE D'ACCÈS À DES DONNÉES

(30) Priorität: 30.09.2013 DE 102013110800
(43) Veröffentlichungstag der Anmeldung: 10.08.2016
(73) Patentinhaber: Bundesdruckerei GmbH, 10969 Berlin (DE)
(72) Erfinder: SCHWAN, Matthias, 10437 Berlin (DE); WIRTH, Klaus Dieter, 12683 Berlin (DE)
(74) Vertreter: Patentship Patentanwaltsgesellschaft mbH
(86) Internationale Anmeldenummer: PCT/EP2014/069995
(87) Internationale Veröffentlichungsnummer: WO 2015/044047

(56) Entgegenhaltungen:
- "BSI -Technische Richtlinie - Stapelsignatur mit dem Heilberufsausweis", , 22. Oktober 2007 (2007-10-22), Seiten 1-37, XP055152506, Gefunden im Internet: URL:https://www.bsi.bund.de/SharedDocs/Dow nloads/DE/BSI/Publikationen/TechnischeRich tlinien/TR03114/BSI-TR-03114_pdf.pdf?__blo b=publicationFile [gefunden am 2014-11-12]
- "HBA_Spezifikation _Teil2_V2 1 0 Einführung der Gesundheitskarte Heilberufs-Ausweis und Security Module Card", , 28. Mai 2006 (2006-05-28), Seiten 1-144, XP055152508, Gefunden im Internet: URL:http://www.dkgev.de/pdf/1436.pdf [gefunden am 2014-11-12]
- Anonymous: "Password Authenticated Connection Establishment - Wikipedia", , 7. Mai 2013 (2013-05-07), XP055152504, Gefunden im Internet: URL:http://de.wikipedia.org/w/index.php?ti tle=Password_Authenticated_Connection_Esta blishment&oldid=118290356 [gefunden am 2014-11-12]
- "Advanced Security Mechanisms for Machine Readable Travel Documents - Part 2", , 20. März 2012 (2012-03-20), XP055152565, Gefunden im Internet: URL:https://www.bsi.bund.de/SharedDocs/Dow nloads/EN/BSI/Publications/TechGuidelines/ TR03110/TR-03110_v2.1_P2pdf.pdf?__blob=pub licationFile [gefunden am 2014-11-12]

## Beschreibung

Die vorliegende Erfindung betrifft ein Verfahren zur Datenzugriffsteuerung in einem Sicherheitsmodul, das einen Speicher mit ersten Daten und zweiten Daten umfasst.

Elektronische Sicherheitsmodule, wie sie in elektronischen Identitätsdokumenten oder Signaturerstellungseinheiten Verwendung finden, dienen im Allgemeinen dem sicheren Aufbewahren von Nutzerdaten, wie beispielsweise Identifikationsdaten, elektronischen Authentisierungsdaten, wie beispielsweise geheimes Schlüsselmaterial oder Passworte und elektronischen Daten zur Signaturerstellung oder Entschlüsselung zur Verwendung in bestimmten lokalen oder entfernten Anwendungen.

Im Allgemeinen authentisiert sich ein Nutzer gegenüber dem Sicherheitsmodul mittels Nutzerauthentisierungsdaten, wie beispielsweise einem Passwort, oder auch mittels biometrischer Verfahren, und autorisiert dadurch die Verwendung weiterer elektronischer Daten in dem Sicherheitsmodul, wie beispielsweise geheimes Schlüsselmaterial zum Zweck der Authentisierung gegenüber einer Remote-Anwendung.

Implementiert ein solches Sicherheitsmodul mehrere Anwendungen werden mehrere voneinander unabhängige Nutzerauthentisierungsdaten, wie beispielsweise Passworte, verwendet. Der Nutzer ist gezwungen sich praktisch mehrere Passworte und zugehörige Entsperrungsmerkmale zu merken. Nach einer erfolgreichen Verifikation der Nutzerauthentisierungsdaten sind alle über diese Authentisierung geschützte Daten durch den Nutzer zur Verwendung autorisiert. Eine dedizierte Freigabe von Daten ist nicht möglich.

Bisherige Verfahren, wie die "multi-Reference PIN" des deutschen HBA oder die PUK des deutschen Personalausweises berücksichtigen lediglich die Verwendung eines Nutzerauthentisierungsdatums, wie PIN- oder PUK-Verifikation, über ein und denselben Mechanismus in unterschiedlichen Applikationskontexten.

Ein PACE-Protokoll nach BSI TR-03110 V2. PACE (Password Authenticated Connection Establishment) bezeichnet ein passwortbasiertes Authentisierungs- und Schlüsseleinigungsverfahren, das beispielsweise in Identifikationsdokumenten eingesetzt wird.

Es ist die der Erfindung zugrundeliegende Aufgabe, eine Datenzugriffsteuerung anzugeben, die dediziert einen Zugriff auf unterschiedliche Daten eines Sicherheitsmoduls ermöglicht, die mit einem einzigen multimodalen Authentisierungsmerkmal gesichert sind.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Verfahren zur Datenzugriffsteuerung in einem Sicherheitsmodul gelöst, das einen Speicher mit ersten Daten und zweiten Daten umfasst, wobei die ersten Daten und die zweiten Daten mittels desselben multimodalen Authentisierungsmerkmals gesichert sind, mit den Schritten eines Auswählens einer ersten Verifikationsmethode zum Erzeugen eines ersten Authentisierungsmerkmals oder einer zweiten Verifikationsmethode zum Erzeugen eines zweiten Authentisierungsmerkmals; eines Zulassens eines Zugriffs auf die ersten Daten des Sicherheitsmoduls bei einer Verifikation des ersten Authentisierungsmerkmals durch eine Abbildung des multimodalen Authentisierungsmerkmals auf das erste Authentisierungsmerkmal mittels eines ersten Abbildungsverfahrens; und eines Zulassens eines Zugriffs auf die zweiten Daten des Sicherheitsmoduls bei einer Verifikation des zweiten Authentisierungsmerkmals durch eine Abbildung des multimodalen Authentisierungsmerkmals auf das zweite Authentisierungsmerkmal mittels eines zweiten Abbildungsverfahrens. Dadurch wird beispielsweise der technische Vorteil erreicht, dass eine Zugriffssteuerung auf unterschiedliche Daten des Sicherheitsmoduls trotz der Verwendung eines einzigen (multimodalen) Authentisierungsmerkmals erfolgen kann.

In einer vorteilhaften Ausführungsform des Verfahrens ist die erste und/oder zweite Verifikationsmethode eine Geräteauthentisierung zum gegenseitigen Authentisieren eines Terminals mit dem Sicherheitsmodul. Dadurch wird beispielsweise der technische Vorteil erreicht, dass einzelne Geräte authentisiert werden können und der Zugriff auf die in dem Sicherheitsmodul gespeicherten Daten je Gerät erfolgen kann.

In einer weiteren vorteilhaften Ausführungsform des Verfahrens ist die erste und/oder zweite Verifikationsmethode ein biometrisches Verfahren zum Erzeugen des ersten oder zweiten Authentisierungsmerkmals auf Basis biometrischer Eigenschaften. Dadurch wird beispielsweise der technische Vorteil erreicht, dass biometrische Eigenschaften zur Benutzerverifikation verwendet werden können.

In einer weiteren vorteilhaften Ausführungsform des Verfahrens ist die erste oder zweite Verifikationsmethode ein Passwortverifikationsverfahren zum Erzeugen des ersten oder zweiten Authentisierungsmerkmals auf Basis einer Passworteingabe. Dadurch wird beispielsweise der technische Vorteil erreicht, dass ein Passwort zur Benutzerverifikation durch eine explizite Passwortverifikation effizient verwendet werden kann.

In einer weiteren vorteilhaften Ausführungsform des Verfahrens umfasst die erste und/oder zweite Verifikationsmethode eine Sitzungsschlüsselableitung aus einem Passwort. Dadurch wird beispielsweise der technische Vorteil erreicht, dass durch die implizite Passwortverifikation die Sicherheit des Verifikationsverfahrens verbessert wird.

In einer weiteren vorteilhaften Ausführungsform des Verfahrens ist die erste und/oder zweite Verifikationsmethode ein Challenge-Response-Verfahren mit oder ohne Sitzungsschlüsselableitung. Dadurch wird beispielsweise der technische Vorteil erreicht, dass eine Geräteauthentisierung effizient umgesetzt werden kann.

In einer weiteren vorteilhaften Ausführungsform des Verfahrens wird das erste oder zweite Authentisierungsmerkmal verifiziert, wenn die Abbildung des ersten oder zweiten Authentisierungsmerkmals dem multimodalen Authentisierungsmerkmal entspricht. Dadurch wird beispielsweise der technische Vorteil erreicht, dass eine hohe Sicherheit des Verfahrens erreicht wird, das einen Zugriff nur dann zulässt, wenn eine exakte Übereinstimmung erreicht wird.

In einer weiteren vorteilhaften Ausführungsform des Verfahrens wird das erste oder zweite Authentisierungsmerkmal verifiziert, wenn die Abbildung des ersten oder zweiten Authentisierungsmerkmals in einem vorgegebenen Wertebereich um das multimodale Authentisierungsmerkmal liegt. Dadurch wird beispielsweise der technische Vorteil erreicht, dass leichte Abbildungsfehler ausgeglichen werden können.

In einer weiteren vorteilhaften Ausführungsform des Verfahrens ist der Zugriff auf die ersten oder die zweiten Daten ein Lesezugriff, Schreibzugriff, oder Ausführungszugriff. Dadurch wird beispielsweise der technische Vorteil erreicht, dass unterschiedliche Zugriffsarten je nach ausgewählter Verifikationsmethode ausgewählt werden können.

In einer weiteren vorteilhaften Ausführungsform des Verfahrens ist dem multimodalen Authentisierungsmerkmal zumindest ein Attribut zugeordnet. Dadurch wird beispielsweise der technische Vorteil erreicht, dass das Verfahren auf Grundlage bestimmter Eigenschaften des multimodalen Authentisierungsmerkmals gesteuert werden kann.

In einer weiteren vorteilhaften Ausführungsform des Verfahrens ist das Attribut ein Passwort zum Entsperren der ersten und der zweiten Verifikationsmethode. Dadurch wird beispielsweise der technische Vorteil erreicht, dass beide Verifikationsmethoden auf einfache Weise durch einmalige Eingabe eines einzigen Passwortes entsperrt werden können.

In einer weiteren vorteilhaften Ausführungsform des Verfahrens ist das Sicherheitsmodul eine Chipkarte oder ein Mobiltelefon. Dadurch wird beispielsweise der technische Vorteil erreicht, dass das Verfahren in einem Endgerät für einen Benutzer ausgeführt wird.

Gemäß einem zweiten Aspekt der Erfindung wird die Aufgabe durch ein Sicherheitsmodul zum Durchführen einer ersten Verifikationsmethode zum Erzeugen eines ersten Authentisierungsmerkmals oder einer zweiten Verifikationsmethode zum Erzeugen eines zweiten Authentisierungsmerkmals, wobei das Sicherheitsmodul einen Speicher mit ersten Daten und zweiten Daten umfasst, die die mittels desselben multimodalen Authentisierungsmerkmals gesichert sind, wobei das Sicherheitsmodul eine Zugriffssteuereinrichtung zum Zulassen eines Zugriffs auf die ersten Daten des Sicherheitsmoduls bei einer Verifikation des ersten Authentisierungsmerkmals durch eine Abbildung des multimodalen Authentisierungsmerkmals auf das erste Authentisierungsmerkmal mittels eines ersten Abbildungsverfahrens; und zum Zulassen eines Zugriffs auf die zweiten Daten des Sicherheitsmoduls bei einer Verifikation des zweiten Authentisierungsmerkmals durch eine Abbildung des multimodalen Authentisierungsmerkmals auf das zweite Authentisierungsmerkmal mittels eines zweiten Abbildungsverfahrens umfasst. Dadurch wird beispielsweise der technische Vorteil erreicht, dass, obwohl ein einziges, multimodales Authentisierungsmerkmal verwendet wird, der Zugriff auf unterschiedliche Daten dediziert freigegeben oder gesperrt werden kann.

In einer weiteren vorteilhaften Ausführungsform des Sicherheitsmoduls umfasst die Zugriffssteuereinrichtung einen Speicher zum Speichern des multimodalen Authentisierungsmerkmals. Dadurch wird beispielsweise der technische Vorteil erreicht, dass die Zugriffseinrichtung in einfacher Weise auf das Passwort zugreifen kann.

In einer weiteren vorteilhaften Ausführungsform des Sicherheitsmoduls umfasst die Zugriffssteuereinrichtung einen Attributspeicher zum Speichern eines Attributes für das multimodale Authentisierungsmerkmal. Dadurch wird beispielsweise der technische Vorteil erreicht, dass je nach Passwortverifikationsverfahren unterschiedliche Eigenschaften festgelegt werden können.

Das Verfahren und das Sicherheitsmodul können in einem Identifikationsdokument vorgesehen sein. In diesem Zusammenhang kann das Identifikationsdokument eines der folgenden Identifikationsdokumente sein: Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Ausführungsbeispiele der Erfindung sind in den Zeichnungen dargestellt und werden im Folgenden näher beschrieben.

Es zeigen:
- Fig. 1: eine schematische Ansicht eines Sicherheitsmoduls in einer Ausführungsform;
- Fig. 2: eine schematische Ansicht eines Sicherheitsmoduls in einer weiteren Ausführungsform, und
- Fig. 3: ein Blockschaltbild des Verfahrens.

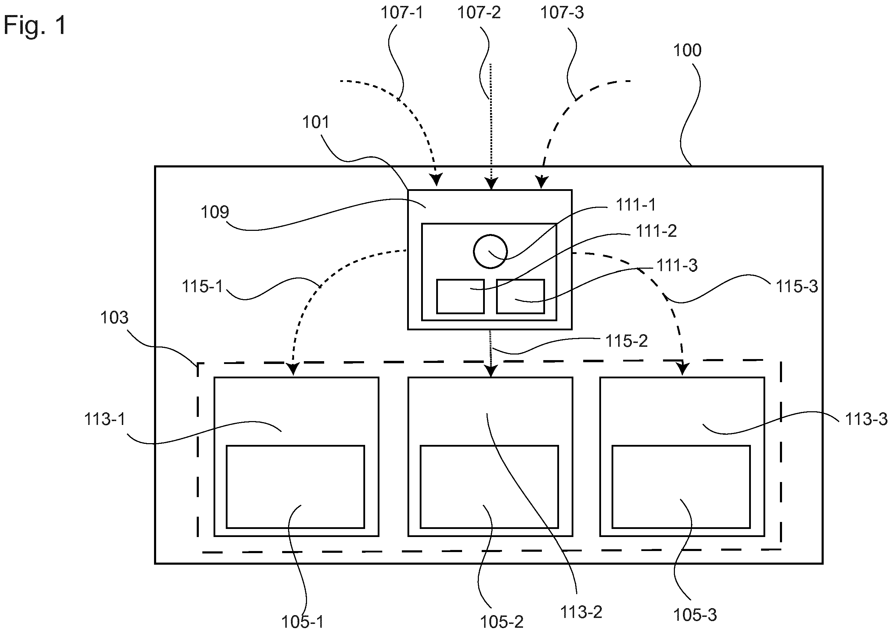

Fig. 1 zeigt eine schematische Ansicht eines Sicherheitsmoduls 100 in einer Ausführungsform. Das Sicherheitsmodul 100 umfasst eine Zugriffssteuereinrichtung 109 in der ein multimodales Authentifizierungsmerkmal 101 in einem nicht-flüchtigen Speicher gespeichert ist, wie beispielsweise in einem EEPROM- oder Flash-Speicher. Das Sicherheitsmodul ist beispielsweise ein Hardware-Sicherheitsmodul (HSM) als Peripheriegerät für die effiziente und sichere Ausführung kryptographischer Operationen oder Applikationen.

Daneben umfasst das Sicherheitsmodul 100 einen Speicher 103, in dem eine erste Anwendung 113-1, eine zweite Anwendung 113-2 und eine dritte Anwendung 113-3 gespeichert sind. Die erste Anwendung 113-1 weist die ersten Daten 105-1, die zweite Anwendung 113-2 weist die Daten 105-2 und die dritte Anwendung 113-3 weist die Daten 105-3 auf. Die Daten 105-1, 105-2 und 105-3 sind mit dem gleichen multimodalen Authentifizierungsmerkmal 101 geschützt oder gesichert. Das multimodale Authentifizierungsmerkmal 101 bildet ein einziges Verifikationsdatum, das in Abhängigkeit der gewählten Verifikationsmethode 107-1, 107-2 oder 107-3 unterschiedlich interpretiert wird. Das multimodale Authentifizierungsmerkmal 101 ist in dem Sicherheitsmodul 100 in Form einer Zahlen- oder Zeichenkette abgelegt.

Das multimodale Authentifizierungsmerkmal 101 erlaubt die Sicherung der Daten 105-1, 105-2 und 105-3 in dem Sicherheitsmodul 100 mit ein und derselben Zeichenkette. Das Sicherheitsmodul 100 verwaltet nur ein einziges Authentisierungsdatum, wie beispielsweise eine Zahlenkette mit zugehörigem Entsperrungsmerkmal, um damit einen Zugriff auf unterschiedliche Daten 105-1, 105-2 und 105-3 des Sicherheitsmoduls 100 in Abhängigkeit der Verifikationsmethode 107-1, 107-2 oder 107-3 zu autorisieren.

Eine erste Verifikationsmethode 107-1 ist beispielsweise eine Passwortverifikation über einen alphanumerischen Vergleich. Die als Authentisierungsmerkmal eingegebene Zeichenkette wird beispielsweise über ein erstes Abbildungsverfahren wie beispielsweise die Identitätsfunktion oder eine Umsetzungstabelle oder ein kryptografisches Verfahren auf eine weitere Ergebniszeichenkette abgebildet. Die abgebildete Ergebniszeichenkette wird mit dem gespeicherten multimodalen Authentisierungsmerkmal 101 verglichen. Im Falle einer Übereinstimmung lässt die Zugriffssteuerung 109 in Abhängigkeit des gewählten Abbildungsverfahrens eine erste Autorisierung 115-1 zum Zugriff auf die ersten Daten 105-1 der ersten Anwendung 113-1 zu.

Eine zweite Verifikationsmethode 107-2 ist beispielsweise ein Fingerabdruckscan. Bei der Durchführung des Fingerabdruckscans wird ein Authentisierungsmerkmal aufgrund der gewonnenen biometrischen Fingerabdruckdaten eines Benutzers sowie des multimodalen Authentisierungsmerkmals gewonnen. Dieses Authentisierungsmerkmal wird mittels eines geeigneten Abbildungsverfahrens ebenfalls auf eine Ergebniszeichenkette abgebildet.

Abbildungsverfahren, die eine Abbildung von biometrische Nutzereigenschaften auf ein bestimmtes Datum ermöglichen, sind beispielsweise unter dem Namen Biometric Template Protection, Fuzzy Vault, Biohashing, Biocryptics, Biotoken oder Pseud Identies bekannt.

Auch in diesem Fall wird die gewonnene Ergebniszeichenkette mit einem gespeicherten Authentisierungsmerkmal verglichen. Im Falle einer hinreichenden Übereinstimmung lässt die Zugriffssteuerung 109 aufgrund des gewählten Abbildungsverfahrens eine zweite Autorisierung 115-2 zum Zugriff auf die zweiten Daten 105-2 der zweiten Anwendung 113-2 zu.

Eine dritte Verifikationsmethode 107-3 ist beispielsweise das Auslesen eines Magnetstreifens einer Magnetkarte oder das optische Lesen eines 2D Barcodes oder einer Zeichenkette. Die hierbei gewonnenen Daten stellen ein drittes Authentisierungsmerkmal dar. Dieses Authentisierungsmerkmal wird beispielsweise mittels eines geeigneten Abbildungsverfahrens aus den so gewonnen Daten und dem multimodalen Authentisierungsdatum in dem Sicherheitsmodul 100 gebildet, auf eine Ergebniszeichenkette abgebildet und mit einer gespeicherten Ergebniszeichenkette verglichen. Im Falle einer hinreichenden Übereinstimmung lässt die Zugriffssteuerung 109 aufgrund des gewählten Abbildungsverfahrens eine dritte Autorisierung 115-3 zum Zugriff auf die dritten Daten 105-3 der dritten Anwendung 113-3 zu.

Weitere Verifikationsmethoden 107-1, 107-2 und 107-3 sind beispielsweise ein alphanumerischer Vergleich, eine Sitzungsschlüsselableitung aus einem Passwort, ein Challenge-Response Verfahren mit oder ohne Sitzungsschlüsselableitung (wie beispielsweise ein "Key Transport Protocol" in CEN EN 14890-1) oder eine kryptographische Verifikation des Passwortes mittels eines kryptografischen Schüssels. Das Sicherheitsmodul 100 kann den Sitzungsschlüssel jedoch auch auf Basis einer Zufallszahl bestimmen. Eine weitere Verifikationsmethode 107-2 ist beispielsweise eine Passwortverifikation über eine Ableitung eines kryptografischen Schlüssels und anschließendem Sitzungsschlüsselaustausch, wie beispielsweise ein PACE-Protokoll nach BSI TR-03110 V2. PACE (Password Authenticated Connection Establishment) bezeichnet ein passwortbasiertes Authentisierungs- und Schlüsseleinigungsverfahren, das beispielsweise in Identifikationsdokumenten eingesetzt wird.

Dadurch wird in Abhängigkeit des je nach Verifikationsmethode 107-1, 107-2 oder 107-3 verwendeten Abbildungsverfahren einer externen Anwendung, wie beispielsweise dem Interface Device (IFD) oder einer Remoteanwendung wie einem Webservice, der Zugriff auf die ersten Daten 105-1 der ersten Anwendung 113-1, die Daten 105-2 der zweiten Anwendung 113-2 oder die Daten 105-3 der dritten Anwendung 113-3 gewährt.

Ein konkretes Anwendungsbeispiel für die Funktionsweise des Sicherheitsmoduls 100 ist in einem elektronischen Personalausweis gegeben. Der elektronische Personalausweis ist durch eine Chipkarte gebildet, die einen elektronischen Chip umfasst. Auf dem Chip ist das Sicherheitsmodul 100 gebildet.

Ein Benutzer ruft beispielsweise die Web-Seite eines Unternehmens über einen Computer auf, an den ein Chipkartenlesegerät angeschlossen ist. In das Chipkartenlesegerät ist ein elektronischer Personalausweis mit einem Sicherheitsmodul 100 eingesteckt. Der Benutzer möchte beispielsweise einen Vertrag mit dem Unternehmen über dessen Web-Seite abschließen.

Dazu soll in einem ersten Schritt zunächst das Alter des Benutzers festgestellt werden. Dazu wird über den Webservice das Sicherheitsmodul 100 über ein erstes Verifikationsprotokoll aufgerufen, das zur Durchführung einer ersten Passwortverifizierung dient. Das Sicherheitsmodul 100 im Kartenlesegerät fordert daraufhin das Passwort des Benutzers an. Der Benutzer gibt das Passwort über den Computer ein. Das empfangene Passwort wird durch das Sicherheitsmodul 100 mittels eines ersten Verifikationsverfahrens verifiziert und der Zugriff auf die ersten Daten 105-1 zugelassen, in denen das Alter des Benutzers abgelegt ist. Ein Zugriff auf die zweiten und dritten Daten 105-2 und 105-3 des Sicherheitsmoduls 100, in denen andere Merkmale gespeichert sind, wird nicht zugelassen. Die zweiten und dritten Daten 105-2 und 105-3 sind daher bei Verwendung der ersten Verifikationsmethode 107-1 geschützt.

Nach einem erfolgreichen Altersnachweis soll beispielsweise ein Vertrag elektronisch signiert werden, wozu der Nutzer seine Signaturerstellungsdaten freischalten muss. Die Nutzerverifikation soll über einen Fingerabdruckscan realisiert werden. Dazu legt der Benutzer einen seiner Finger auf einen Fingerabdruckscanner, der ein weiteres biometrisches Authentisierungsmerkmal auf Basis der biometrischen Eigenschaften des Fingerabdrucks erzeugt. Dieses biometrische Authentisierungsmerkmal wird in Verbindung mit den Versionsdaten der gewählten Verifikationsmethode 107-1 an das Sicherheitsmodul 100 übertragen. Das Sicherheitsmodul 100 bildet mittels eines Abbildungsverfahrens aus dem multimodalen Authentisierungsmerkmal 101 und dem biometrischen Authentisierungsmerkmal auf eine Ergebniszeichenkette ab. Stimmt die Ergebniszeichenkette mit einer im Sicherheitsmodul hinterlegten Ergebniszeichenkette hinreichend überein, so wird beispielsweise der Zugriff auf zweite Daten 105-2 freigegeben, in denen beispielsweise Signaturerstellungsdaten zum Unterschreiben des Vertrages abgelegt sind, zugelassen. Ein Zugriff auf die ersten Daten 105-1 oder die dritten Daten 105-3 wird von der Zugriffssteuerung 109 nicht zugelassen.

Da in beiden Schritten das gleiche multimodale Authentisierungsmerkmal 101 verwendet wird, vereinfacht sich die Zugriffsteuerung, ohne dass Einbußen bei der Sicherheit des Sicherheitsmoduls 100 entstehen. Dem multimodalen Authentisierungsmerkmal 101 sind eine Menge von Attributen 111-1, 111-2 und 111-3 zugeordnet. Das Attribut 111-1 gilt beispielsweise für alle Verifikationsmethoden 107-1, 107-2 und 107-3 gleichsam, wie beispielsweise ein Entsperrungskennwort. Die Attribute 111-2 und 111-3 gelten jeweils nur für eine Verifikationsmethode 107-1 oder 107-2, wie beispielsweise ein Fehlbedienungszähler, ein Zustand wie "authentisiert" oder "nicht-authentisiert" oder ein Lebenszyklus wie "Versiegelt", "Aktiviert", "Deaktiviert", "Geblockt", "Suspendiert".

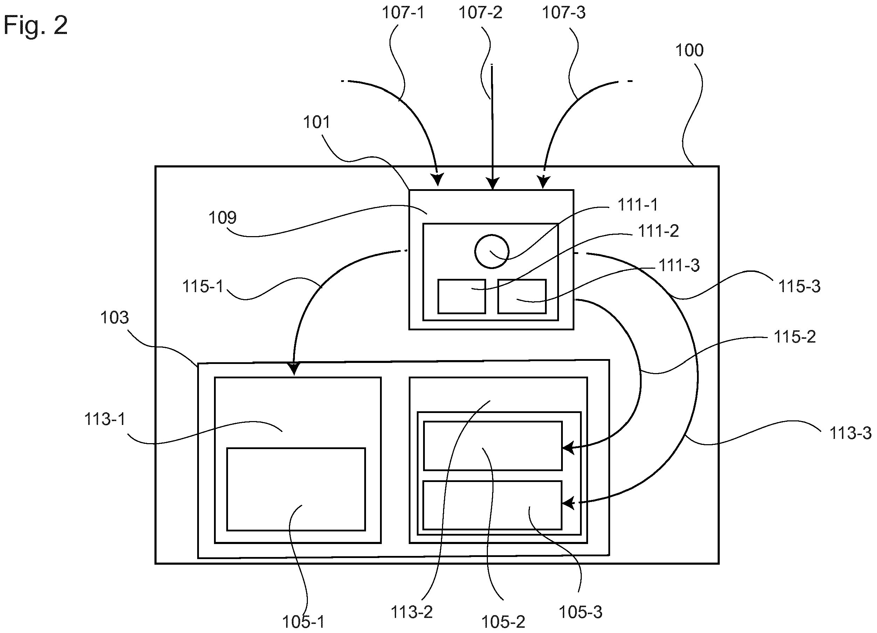

Fig. 2 zeigt eine schematische Ansicht eines Sicherheitsmoduls 100 in einer weiteren Ausführungsform. In dieser Ausführungsform erfolgt der Zugriff auf die ersten Daten 105-1 der Anwendung 113-1 bei Auswahl der ersten Verifikationsmethode 107-1 und dem damit einhergehenden Abbildungsverfahren. Der Zugriff auf die zweiten Daten 105-2 der zweiten Anwendung 113-2 erfolgt bei Auswahl der zweiten Verifikationsmethode 107-1. Der Zugriff auf die dritten Daten 105-3 der zweiten Anwendung 113-2 erfolgt bei Auswahl der dritten Verifikationsmethode 107-3.

Ein Nutzer als Besitzer des elektronischen Sicherheitsmoduls 100 mit einer oder mehreren Anwendungen 113-1 und 113-2 verwaltet ein einziges multimodales Authentifizierungsmerkmal 101 mit den zugehörigen Attributen 111-1, 111-2 und 111-3, wie beispielsweise dem Entsperrungskennwort, um dieses für eine oder mehrere Applikationen 113-1 und 113-2 zu verwenden. Die Auswahl der Verifikationsmethode 107-1 oder 107-2 und des zugeordneten Abbildungsverfahrens durch den Nutzer bestimmt die Autorisierung eines Zugriffs auf bestimmten Daten 105-1 oder 105-2 einer bestimmten Applikation 113-1 oder 113-2.

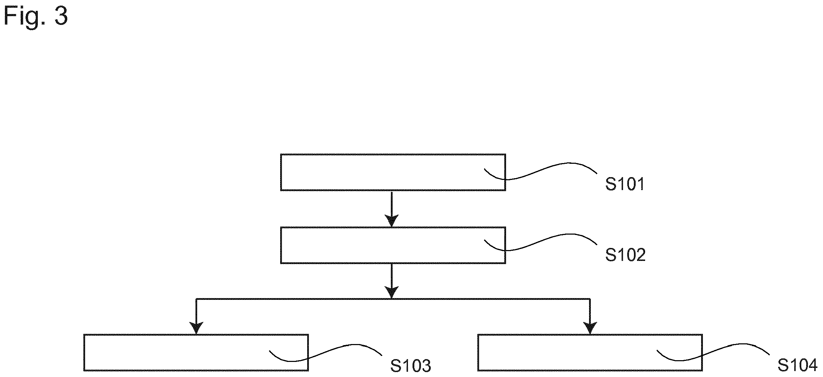

Fig. 3 zeigt ein Blockschaltbild des Verfahrens. In einem ersten Schritt S101 wird zunächst ausgewählt, ob eine Verifizierung nach einer ersten Verifikationsmethode 107-1 oder einer zweiten Verifikationsmethode 107-2 erfolgen soll. Im Rahmen dieser Verifikationsmethoden 107-1, 107-2 wird ein Authentisierungsmerkmal erzeugt, das beispielsweise aus einer alphanumerischen Zeichenkette besteht.

Im Schritt S102 wird das erzeugte erste oder zweite Authentisierungsmerkmal mittels eines ersten oder zweiten Abbildungsverfahrens aus dem multimodalen Authentisierungsdaten 101 und möglichen weiteren Daten auf eine Ergebniszeichenkette abgebildet. Diese Ergebniszeichenkette kann mit einer im Sicherheitsmodul hinterlegten Ergebniszeichenkette verglichen werden oder für weitere kryptografische Operationen wie beispielsweise Sitzungsschlüsselableitung verwendet werden. Der Vergleich kann auf Identität erfolgen oder auch derart erfolgen, dass bestimmt wird, ob die Ergebniszeichenkette innerhalb eines vorgegebenen Abstandes liegt. Dadurch wird die Fehlertoleranz bei zum Beispiel biometrischen Eingaben verbessert. Dem ersten Verifikationsverfahren 107-1 ist beispielsweise ein erstes Abbildungsverfahren zugeordnet und dem zweiten Verifikationsverfahren 107-2 ist beispielsweise ein zweites Abbildungsverfahren zugeordnet.

Im Schritt S103 wird ein Zugriff auf die ersten Daten 105-1 des Sicherheitsmoduls 100 bei einer Verifikation des ersten Authentisierungsmerkmals zugelassen, sofern zuvor das erste Abbildungsverfahren verwendet worden ist.

Im Schritt S104 wird ein Zugriff auf die zweiten Daten 105-2 des Sicherheitsmoduls 100 bei einer Verifikation des zweiten Authentisierungsmerkmals zugelassen, sofern zuvor das zweite Abbildungsverfahren verwendet worden ist.

Der Zugriff kann beispielsweise ein Lesezugriff, ein Schreibzugriff oder ein Ausführungszugriff sein. Die ersten, zweiten oder dritten Daten 105-1, 105-2 und 105-3 können beispielsweise Programmdaten, Funktionsdaten oder Anwendungsdaten sein, die Befehle zur Abarbeitung und Ausführung durch einem Prozessor umfassen. Die ersten, zweiten oder dritten Daten 105-1 und 105-2 können jedoch auch nichtausführbare Daten umfassen, wie beispielsweise Textdaten oder Benutzerdaten.

Der Ausgangspunkt ist das multimodale Authentisierungsmerkmal 101, wie beispielsweise eine achtstellige Zahl (PIN), die im Sicherheitsmodul 100 gespeichert ist. Eine erste Verifikationsmethode 107-1 ist beispielsweise die Abbildung "PACE Protokoll" vom multimodalen Authentisierungsmerkmal (PACE-Eingabe ist die achtstellige Zahl) auf ein erstes Authentisierungsmerkmal (PACE-Ausgabe ist der symmetrische Sitzungsschlüssel).

Eine zweite Verifikationsmethode 107-2 ist beispielsweise die Abbildung "Challenge-Response Protokoll" vom multimodalen Authentisierungsmerkmal (Eingabe ist die achtstellige Zahl) auf ein zweites Authentisierungsmerkmal (Ausgabe des Challenge-Response Protokolls). Als Abbildung wird eine Haschfunktion auf die achtstellige Zahl mit Ableitung eines symmetrischen Schlüssels mit anschließendem Challenge-Response Protokolls mit oder ohne Sitzungsschlüsselableitung angewendet. Eine dritte Verifikationsmethode 107-3 ist beispielsweise die Abbildung "Passwortvergleich" vom multimodalen Authentisierungsmerkmal auf ein drittes Authentisierungsmerkmal, wie beispielsweise ein 1:1 Vergleich. Eine vierte Verifikationsmethode ist beispielsweise die Abbildung "biometrischer Vergleich" vom multimodalen Authentisierungsmerkmal auf ein viertes Authentisierungsmerkmal. Die Abbildung besteht in diesem Fall in einer Ableitung von "Biometric Auxilliary Data" aus der achtstelligen Zahl zur Verwendung in einem "Biometric Template Protection" Verfahren.

Der Vorteil ist, dass ein multimodales Authentisierungsmerkmal verwaltet wird, das verschiedene Attribute aufweist, wie beispielsweise Key-ID, Rücksetzzähler, PUK. Das Ändern dieses Authentisierungsmerkmals 101 (Ändern der PIN) bedeutet auch die Änderung aller anderen abgeleiteten Authentisierungsmerkmale.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Sicherheitsmodul
- 101: multimodales Authentifizierungsmerkmal
- 103: Speicher
- 105-1: Daten
- 105-2: Daten
- 105-3: Daten
- 107-1: Verifikationsmethode
- 107-2: Verifikationsmethode
- 107-3: Verifikationsmethode
- 109: Zugriffssteuereinrichtung
- 111-1: Attribut
- 111-2: Attribut
- 111-3: Attribut
- 113-1: Anwendung
- 113-2: Anwendung
- 113-3: Anwendung
- 115-1: Autorisierung
- 115-2: Autorisierung
- 115-3: Autorisierung

## Patentansprüche

1. Verfahren zur Datenzugriffsteuerung in einem Sicherheitsmodul (100), das einen Speicher (103) mit ersten Daten (105-1) und zweiten Daten (105-2) umfasst, wobei die ersten Daten (105-1) und die zweiten Daten (105-2) mittels desselben multimodalen Authentisierungsmerkmals (101) gesichert sind, mit den Schritten:
- Auswählen (S101) einer ersten Verifikationsmethode (107-1) zum Erzeugen eines ersten Authentisierungsmerkmals oder einer zweiten Verifikationsmethode (107-2) zum Erzeugen eines zweiten Authentisierungsmerkmals;
- Zulassen (S103) eines Zugriffs auf die ersten Daten (105-1) des Sicherheitsmoduls (100) bei einer Verifikation (S102) des ersten Authentisierungsmerkmals durch eine Abbildung des multimodalen Authentisierungsmerkmals (101) auf das erste Authentisierungsmerkmal mittels eines ersten Abbildungsverfahrens; und
- Zulassen (S104) eines Zugriffs auf die zweiten Daten (105-2) des Sicherheitsmoduls (100) bei einer Verifikation (102) des zweiten Authentisierungsmerkmals durch eine Abbildung des multimodalen Authentisierungsmerkmals (101) auf das zweite Authentisierungsmerkmal mittels eines zweiten Abbildungsverfahrens; wobei
- das Ändern des multimodalen Authentifizierungsmerkmals (101) auch die Änderung des ersten und zweiten Authentisierungsmerkmals bewirkt.

2. Verfahren nach Anspruch 1, wobei die erste und/oder zweite Verifikationsmethode (107-1, 107-2) eine Geräteauthentisierung zum gegenseitigen Authentisieren eines Terminals mit dem Sicherheitsmodul (100) ist.

3. Verfahren nach einem der vorangehenden Ansprüche, wobei die erste und/oder zweite Verifikationsmethode (107-1, 107-2) ein biometrisches Verfahren zum Erzeugen des ersten oder zweiten Authentisierungsmerkmals auf Basis biometrischer Eigenschaften ist.

4. Verfahren nach einem der vorangehenden Ansprüche, wobei die erste oder zweite Verifikationsmethode (107-1, 107-2) ein Passwortverifikationsverfahren zum Erzeugen des ersten oder zweiten Authentisierungsmerkmals auf Basis einer Passworteingabe ist.

5. Verfahren nach einem der vorangehenden Ansprüche, wobei die erste und/oder zweite Verifikationsmethode (107-1, 107-2) eine Sitzungsschlüsselableitung aus einem Passwort umfasst.

6. Verfahren nach einem der vorangehenden Ansprüche, wobei die erste und/oder zweite Verifikationsmethode (107-1, 107-2) ein Challenge-Response-Verfahren mit oder ohne Sitzungsschlüsselableitung ist.

7. Verfahren nach einem der vorangehenden Ansprüche, wobei das erste oder zweite Authentisierungsmerkmal verifiziert wird, wenn die Abbildung auf das erste oder zweite Authentisierungsmerkmal dem multimodalen Authentisierungsmerkmal (101) entspricht.

8. Verfahren nach einem der vorangehenden Ansprüche, wobei das erste oder zweite Authentisierungsmerkmal verifiziert wird, wenn die Abbildung des ersten oder zweiten Authentisierungsmerkmals in einem vorgegebenen Wertebereich um das multimodale Authentisierungsmerkmal (101) liegt.

9. Verfahren nach einem der vorangehenden Ansprüche, wobei der Zugriff auf die ersten oder die zweiten Daten (105-1, 105-2) ein Lesezugriff, Schreibzugriff, oder Ausführungszugriff ist.

10. Verfahren nach einem der vorangehenden Ansprüche, wobei dem multimodalen Authentisierungsmerkmal (101) zumindest ein Attribut (111-1, 111-2, 111-3) zugeordnet ist.

11. Verfahren nach einem der vorangehenden Ansprüche, wobei das Attribut (111-1) ein Passwort zum Entsperren der ersten und der zweiten Verifikationsmethode (107-1, 107-2) ist.

12. Verfahren nach einem der vorangehenden Ansprüche, wobei das Sicherheitsmodul (100) eine Chipkarte oder ein Mobiltelefon ist.

13. Sicherheitsmodul (100) zum Durchführen einer ersten Verifikationsmethode (107-1) zum Erzeugen eines ersten Authentisierungsmerkmals oder einer zweiten Verifikationsmethode (107-2) zum Erzeugen eines zweiten Authentisierungsmerkmals, wobei das Sicherheitsmodul (100) einen Speicher (103) mit ersten Daten (105-1) und zweiten Daten (105-2) umfasst, die die mittels desselben multimodalen Authentisierungsmerkmals (101) gesichert sind, wobei das Sicherheitsmodul (100) eine Zugriffssteuereinrichtung (109) zum Zulassen (S103) eines Zugriffs auf die ersten Daten (105-1) des Sicherheitsmoduls (100) bei einer Verifikation des ersten Authentisierungsmerkmals durch eine Abbildung des multimodalen Authentisierungsmerkmals (101) auf das erste Authentisierungsmerkmal mittels eines ersten Abbildungsverfahrens; und zum Zulassen (S103) eines Zugriffs auf die zweiten Daten (105-1) des Sicherheitsmoduls (100) bei einer Verifikation des zweiten Authentisierungsmerkmals durch eine Abbildung des multimodalen Authentisierungsmerkmals (101) auf das zweite Authentisierungsmerkmal mittels eines zweiten Abbildungsverfahrens umfasst, wobei das Ändern des multimodalen Authentifizierungsmerkmals (101) auch die Änderung des ersten und zweiten Authentisierungsmerkmals bewirkt.

14. Sicherheitsmodul (100) nach Anspruch 13, wobei die Zugriffssteuereinrichtung (109) einen Speicher zum Speichern des multimodalen Authentisierungsmerkmals (101) umfasst.

15. Sicherheitsmodul (100) nach Anspruch 13 oder 14, wobei die Zugriffssteuereinrichtung (109) einen Attributspeicher (113) zum Speichern eines Attributes für das multimodale Authentisierungsmerkmal (101) umfasst.

## Claims

1. Method for controlling access to data in a security module (100) which comprises a memory (103) containing first data (105-1) and second data (105-2), wherein the first data (105-1) and the second data (105-2) are protected by means of the same multimodal authentication feature (101), said method comprising the steps:
- selecting (S101) a first verification method (107-1) for generating a first authentication feature or a second verification method (107-2) for generating a second authentication feature;
- permitting (S103) access to the first data (105-1) of the security module (100) upon verification (S102) of the first authentication feature by mapping the multimodal authentication feature (101) onto the first authentication feature by means of a first mapping method; and
- permitting (S104) access to the second data (105-2) of the security module (100) upon verification (102) of the second authentication feature by mapping the multimodal authentication feature (101) onto the second authentication feature by means of a second mapping method; wherein
- changing the multimodal authentication feature (101) also changes the first and second authentication feature.

2. Method according to claim 1, wherein the first and/or second verification method (107-1, 107-2) is a device authentication for mutually authenticating a terminal with the security module (100).

3. Method according to one of the preceding claims, wherein the first and/or second verification method (107-1, 107-2) is a biometric method for generating the first or second authentication feature based on biometric properties.

4. Method according to one of the preceding claims, wherein the first or second verification method (107-1, 107-2) is a password verification method for generating the first or second authentication feature based on a password input.

5. Method according to one of the preceding claims, wherein the first and/or second verification method (107-1, 107-2) comprises deriving a session key from a password.

6. Method according to one of the preceding claims, wherein the first and/or second verification method (107-1, 107-2) is a challenge/response method with or without derivation of a session key.

7. Method according to one of the preceding claims, wherein the first or second authentication feature is verified if the mapping onto the first or second authentication feature matches the multimodal authentication feature (101).

8. Method according to one of the preceding claims, wherein the first or second authentication feature is verified if the mapping of the first or second authentication feature lies in a predefined value range around the multimodal authentication feature (101).

9. Method according to one of the preceding claims, wherein the access to the first or second data (105-1, 105-2) is a read access, write access, or execute access.

10. Method according to one of the preceding claims, wherein at least one attribute (111-1, 111-2, 111-3) is assigned to the multimodal authentication feature (101).

11. Method according to one of the preceding claims, wherein the attribute (111-1) is a password for unlocking the first and second verification method (107-1, 107-2).

12. Method according to one of the preceding claims, wherein the security module (100) is a chip card or a mobile telephone.

13. Security module (100) for carrying out a first verification method (107-1) for generating a first authentication feature or a second verification method (107-2) for generating a second authentication feature, wherein the security module (100) comprises a memory (103) containing first data (105-1) and second data (105-2) which which are protected by means of the same multimodal authentication feature (101), wherein the security module (100) comprises an access control means (109) for permitting (SI03) access to the first data (105-1) of the security module (100) upon verification of the first authentication feature by mapping the multimodal authentication feature (101) onto the first authentication feature by means of a first mapping method; and for permitting (SI03) access to the second data (105-1) of the security module (100) upon verification of the second authentication feature by mapping the multimodal authentication feature (101) onto the second authentication feature by means of a second mapping method, wherein changing the multimodal authentication feature (101) also changes the first and second authentication feature.

14. Security module (100) according to claim 13, wherein the access control means (109) comprises a memory for storing the multimodal authentication feature (101).

15. Security module (100) according to claim 13 or 14, wherein the access control means (109) comprises an attribute memory (113) for storing an attribute for the multimodal authentication feature (101).

## Revendications

1. Procédé de commande d'accès à des données dans un module de sécurité (100) comprenant une mémoire (103) contenant des premières données (105-1) et des deuxièmes données (105-2), les premières données (105-1) et les deuxièmes données (105-2) étant sécurisées au moyen de la même caractéristique d'authentification multimodale (101), comprenant les étapes suivantes :
- sélection (S101) d'une première méthode de vérification (107-1) pour la génération d'une première caractéristique d'authentification, ou d'une deuxième méthode de vérification (107-2) pour la génération d'une deuxième caractéristique d'authentification ;
- autorisation (S103) d'un accès aux premières données (105-1) du module de sécurité (100) lors d'une vérification (S102) de la première caractéristique d'authentification par représentation de la caractéristique d'authentification multimodale (101) vers la première caractéristique d'authentification au moyen d'un premier procédé de représentation ; et
- autorisation (S104) d'un accès aux deuxièmes données (105-2) du module de sécurité (100) lors d'une vérification (102) de la deuxième caractéristique d'authentification par représentation de la caractéristique d'authentification multimodale (101) vers la deuxième caractéristique d'authentification au moyen d'un deuxième procédé de représentation ; où
- la modification de la caractéristique d'authentification multimodale (101) provoque également la modification de la première et de la deuxième caractéristiques d' authentification.

2. Procédé selon la revendication 1, où la première et/ou la deuxième méthode de vérification (107-1, 107-2) sont une authentification d'appareil pour l'authentification réciproque d'un terminal avec le module de sécurité (100).

3. Procédé selon l'une des revendications précédentes, où la première et/ou la deuxième méthode de vérification (107-1, 107-2) sont un procédé de génération de la première ou de la deuxième caractéristique d'authentification sur la base de propriétés biométriques.

4. Procédé selon l'une des revendications précédentes, où la première ou la deuxième méthode de vérification (107-1, 107-2) est un procédé de vérification de mot de passe pour générer la première ou la deuxième caractéristique d'authentification sur la base d'une entrée de mot de passe.

5. Procédé selon l'une des revendications précédentes, où la première et/ou la deuxième méthode de vérification (107-1, 107-2) comprennent une dérivation de clé de session à partir d'un mot de passe.

6. Procédé selon l'une des revendications précédentes, où la première et/ou la deuxième méthode de vérification (107-1, 107-2) sont un procédé stimulation/réponse avec ou sans dérivation de clé de session.

7. Procédé selon l'une des revendications précédentes, où la première ou la deuxième caractéristique d'authentification est vérifiée si la représentation vers la première ou la deuxième caractéristique d'authentification correspond à la caractéristique d'authentification multimodale (101).

8. Procédé selon l'une des revendications précédentes, où la première ou la deuxième caractéristique d'authentification est vérifiée si la représentation de la première ou de la deuxième caractéristique d'authentification est située dans une plage de valeurs définie autour de la caractéristique d'authentification multimodale (101).

9. Procédé selon l'une des revendications précédentes, où l'accès aux premières ou aux deuxièmes données (105-1, 105-2) st un accès en lecture, un accès en écriture ou un accès pour exécution.

10. Procédé selon l'une des revendications précédentes, où au moins un attribut (111-1, 111-2, 111-3) est associé à la caractéristique d'authentification multimodale (101).

11. Procédé selon l'une des revendications précédentes, où l'attribut (111-1) est un mot de passe pour le déverrouillage de la première et de la deuxième méthodes de vérification (107-1, 107-2).

12. Procédé selon l'une des revendications précédentes, où le module de sécurité (100) est une carte à puce ou un téléphone mobile.

13. Module de sécurité (100) pour l'exécution d'une première méthode de vérification (107-1) afin de générer une première caractéristique d'authentification ou une deuxième méthode de vérification (107-2) pour la génération d'une deuxième caractéristique d'authentification, où ledit module de sécurité (100) comprend une mémoire (103) contenant des premières données (105-1) et des deuxièmes données (105-2), lesquelles sont sécurisées au moyen de la même caractéristique d'authentification multimodale (101), où ledit module de sécurité (100) comprend un dispositif de commande d'accès (109) pour autoriser (S103) un accès aux premières données (105-1) du module de sécurité (100) lors d'une vérification de la première caractéristique d'authentification par représentation de la caractéristique d'authentification multimodale (101) vers la première caractéristique d'authentification au moyen d'un premier procédé de représentation ; et pour autoriser (S103) un accès aux deuxièmes données (105-1) du module de sécurité (100) lors d'une vérification de la deuxième caractéristique d'authentification par représentation de la caractéristique d'authentification multimodale (101) vers la deuxième caractéristique d'authentification au moyen d'un deuxième procédé de représentation, la modification de la caractéristique d'authentification multimodale (101) provoquant également la modification de la première et de la deuxième caractéristiques d' authentification.

14. Module de sécurité (100) selon la revendication 13, où le dispositif de commande d'accès (109) comprend une mémoire pour la sauvegarde de la caractéristique d'authentification multimodale (101).

15. Module de sécurité (100) selon la revendication 13 ou la revendication 14, où le dispositif de commande d'accès (109) comprend une mémoire d'attribut (113) pour la sauvegarde d'un attribut pour la caractéristique d'authentification multimodale (101).
